# EUROPEAN PATENT SPECIFICATION

(11) **EP 0 905 208 B1**
(45) Date of publication and mention of the grant of the patent: **28.07.2004**
(21) Application number: 98118370.0
(22) Date of filing: 29.09.1998
(51) Int. Cl.: C09D 201/02, C08G 59/14

(54) **Curable coating composition having latent functionality**
Härtbare Beschichtungsmischung mit Latent-Funktionalität
Composition de revêtement durcissable ayant une fonctionnalité latente

(30) Priority: 30.09.1997 US 941131; 30.09.1997 US 941561; 30.09.1997 US 941562
(43) Date of publication of application: 31.03.1999
(73) Proprietor: BASF CORPORATION, Mount Olive, New Jersey 07828-1234 (US)
(72) Inventor: December, Timothy, Rochester Hills, Michigan 48307 (US); Harris, Paul, West Bloomfield, Michigan 48324 (US)
(74) Representative: Münch, Volker, Dr.

(56) References cited:
- EP-A- 0 092 516
- EP-A- 0 661 354
- US-A- 3 639 657

## Description

### Field of the Invention

The present invention relates to coating compositions and coating methods and in particular to such coatings having latent amine functionality.

### Background of the Invention

Thermosetting, or curing, coating compositions are widely used in coatings operations. In automotive coatings in particular, thermoset coatings provide durable finishes. Automotive coatings include primers and topcoats, which may be single layer topcoats or two layer basecoat/clearcoat topcoat systems. The primer may be applied either as a first coating layer or over another layer, for example over an electrocoat primer layer. The topcoat is then usually applied directly over the primer layer.

Various concerns arise with thermosetting coating compositions. One consideration is the curing conditions needed to achieve sufficient crosslinking of the film. In general, higher curing temperatures and longer times at the curing temperature increase the manufacturing costs of the coated article. Another concern in some cases is that undesirable by-products of the curing reaction are generated. For example, blocked curing agents usually release the blocking agents as volatile organic compounds that are emissions regulated by various government rules. It is also important that the crosslinks that are formed by curing thermosetting compositions are suitable for providing long life to the coating under the particular conditions to which the coated article will be exposed.

One kind of thermosetting coating is electrocoat coatings. Electrocoat, or electrodeposition coating, methods have been used commercially for applying protective coatings to metallic substrates for a number of years. In the electrodeposition coating process, a conductive article or substrate that is to be coated is used as one electrode in an electrochemical cell. The article is submerged in an aqueous dispersion of the coating composition, which contains a charged, preferably a cationic, resin. The resin is deposited onto the article by applying an electrical potential between the article and a second electrode (which may be, for example, the walls of the vessel holding the bath). The coating deposits onto the article until it forms an insulating layer on the article that essentially prevents more current from being passed. The electrocoating process is particularly suited to applying a continuous and uniform protective primer layer to an article or workpiece that has complex shape or construction. When the surfaces of the article closest to the other electrode have been coated and insulated, the current then deposits the coating onto recessed areas and other less accessible areas until an insulating coating layer is formed on all conductive surfaces of the article or workpiece, regardless of how irregularly shaped the article.

Electrocoat processes, particularly for coating automotive bodies and parts, usually employ a thermosetting coating composition comprising an ionic, preferably a cationic principal resin and a polyfunctional oligomeric or monomeric crosslinking agent that is capable of reacting with the principal resin to cure or crosslink the coating. The crosslinking agent is associated with the principal resin in the dispersion and is deposited along with the principal resin onto the article or workpiece. After deposition, the deposited coating may be cured to a crosslinked, durable coating layer.

A number of crosslinking mechanisms may be employed in thermosetting coatings. One curing mechanism utilizes a melamine formaldehyde resin curing agent in the coating composition to react with hydroxyl groups on the resin. This curing method provides good cure at relatively low temperatures (e.g., 250°F or 121°C with a blocked acid catalyst, or even lower with an unblocked acid catalyst), but the crosslink bonds contain undesirable ether linkages and the resulting coatings provide poor overall durability under certain service conditions or poor corrosion resistance as well as poor chip and cyclic corrosion resistance in electrodeposition coatings. In an alternative curing method, polyisocyanate crosslinkers may be reacted with amine or hydroxyl groups on the resin. This curing method provides desirable urea or urethane crosslink bonds, but it also has several disadvantages. In order to prevent premature gelation of the coating composition, the polyisocyanate must either be kept separate from the resin in what is known in the art as a two-package or two-pack coating system, or else the highly reactive isocyanate groups on the curing agent must be blocked (e.g., with an oxime or alcohol). Blocked polyisocyanates, however, require high temperatures (e.g., 150°C or more) to unblock and begin the curing reaction. The resulting electrocoats can also be susceptible to yellowing. Moreover, the volatile blocking agents released during cure can adversely affect coating properties and increases emissions, decreasing the amount the solid material in the coating composition that ultimately becomes part of the cured film formed on the substrate.

There is thus a need in the art for coating compositions that could provide desirable urethane crosslink linkages, but avoid the problems that accompany the use of polyisocyanate curing agents.

Coating compositions comprising carbonate curing agents and primary amine-functional crosslinkable resins have been proposed for electrocoat primers in December et al., U.S. Patent No. 5,431,791. U.S. Patent No. 5,431,791 describes a cathodic electrodeposition method that applies a coating layer of a resin having a plurality of acid-salted primary amine groups and a curing agent having a plurality of cyclic carbonate groups. In the electrocoat bath, the primary amine groups are salted and rendered unreactive with the carbonate groups of the crosslinker. When the coating is deposited onto the conductive substrate, the primary amine groups are regenerated from the salt and are once more reactive toward the crosslinker. This method of achieving package stability, however, is unsuitable for compositions in which the primary amines are not salted. Also in this method, high levels of the salted primary amine were needed in order to achieve desirable levels of crosslinking. The high content of salted primary amine, however, can cause excessive bath conductivity. In this method, high levels of the salted primary amine were needed in order to achieve desirable levels of crosslinking.

### Summary of tre Invention

We have now invented a coating composition capable of forming durable urethane linkages upon curing of the coating without the attendant problems of polyisocyanate curing agents. The compositions of the present invention comprise a compound or resin having latent primary amine functionality and a compound or resin having a plurality of cyclic carbonate groups. The latent amine compound is formed by reacting a compound having at least two primary amines and at least one functional group that remains unreacted with a cyclic anhydride of a polycarboxylic acid. The unreacted functional group of the latent amine compound is reacted with the resin to form a resin with latent amine functionality.

The present invention further provides a method of coating a substrate by applying a coating composition comprising a resin or compound having latent primary amine functionality and a carbonate resin or compound having a plurality of cyclic carbonate groups and then curing the applied composition. The present invention also provides a substrate having thereon a coating derived from a composition containing a resin or compound having latent primary amine functionality and a carbonate compound having a plurality of cyclic carbonate groups.

In a preferred embodiment, the coating composition of the invention is an electrodeposition coating composition that comprises, in an aqueous medium, a cationic resin having latent primary amine functionality and a curing agent having a plurality of cyclic carbonate groups. The latent amine functionality of the electrocoat compositions of the invention is available for crosslinking when the deposited coating is cured but does not increase bath conductivity or cause coating deposition problems as would free amine groups. The cationic resin may additionally have salted primary amine groups that, after deposition, provide primary amine groups as additional crosslinking sites.

The present invention further provides a method of coating a conductive substrate. In the method of the invention, a conductive substrate is immersed in an electrodeposition coating composition comprising, in an aqueous medium, a cationic resin having latent primary amine functionality and a curing agent having a plurality of cyclic carbonate groups; then, a potential of electric current is applied between an anode and the conductive substrate (which is then the cathode) to deposit a coating layer onto the conductive substrate. The present invention also provides a conductive substrate having thereon a coating derived from a composition containing a resin having latent primary amine functionality and a curing agent having a plurality of cyclic carbonate groups.

### Detailed Description

The compositions of the invention include a compound or resin having latent primary amine functionality and a curing agent with a plurality of cyclic carbonate groups. The compound having latent amine functionality may be formed by reacting two moles of a cyclic anhydride of a polycarboxylic acid with two moles of a compound having at least two primary amine groups. The resin having latent amine functionality may be formed by a two-step synthesis. In the first step, two moles of a cyclic anhydride of a polycarboxylic acid are reacted with two moles of a compound having at least two primary amine groups and at least one group reactive with a functional group on the principal resin. In a second step, the product of the first step is reacted with a resin to form the principal resin with latent primary amine functionality.

The compound having a plurality of cyclic carbonate groups has at least two carbonate groups, and preferably has more than two carbonate groups on average per molecule.

In the synthesis of the compound with latent primary amine functionality, an amine compound with preferably two primary amine groups is employed. The amine compound may optionally have additional functional groups that are not primary amine groups, so long as such groups do not interfere with the reaction between the primary amine groups of the amine compound and the cyclic anhydride. Suitable examples of the primary amine compounds include, without limitation, α,ω-alkylenediamines and polyalkylene polyamines. Examples of suitable polyalkylene polyamines include, without limitation, ethylenediamine, diethylenetriamine, triethylenetetramine, tetraethylenepentamine, dipropylenetriamine, 1,6-diaminohexane, 1,3-diaminopropane, methyl imino-bis(propylamine), 1,4-diaminobutane, and mixtures of these. Particularly preferred among these are ethylenediamine, diethylenetriamine, dipropylenetriamine, and mixtures of these compounds. Preferred polyamines have molecular weights in the range of about 60 to about 400, more preferably from about 60 to about 250, and still more preferably from about 60 to about 160.

In the first step of the synthesis of the principal resin with latent primary amine functionality, an amine compound with at least two primary amine groups and at least one different reactive group is employed. Preferably, the amine compound has up to three, more preferably one or two, and particularly preferably one group that is reactive with an epoxide group. Preferably, the amine compound has one secondary amine group. Suitable examples of the primary amine compounds include, without limitation, polyalkylene polyamines such as diethylenetriamine, triethylenetetramine, tetraethylenepentamine, dipropylenetriamine, and mixtures of these. Particularly preferred among these are diethylenetriamine, dipropylenetriamine, and mixtures of these compounds. Preferred polyamines have molecular weights in the range of about 75 to about 400, more preferably from about 75 to about 250, and still more preferably from about 100 to about 160.

Suitable examples of cyclic anhydrides of polycarboxylic acids that may be used in the reaction with the primary amine compound include, without limitation, phthalic anhydride and substituted derivatives of phthalic anhydride such as 4-sulfophthalic anhydride, 4-methylphthalic anhydride, 3-hydroxyphthalic anhydride, nitrophthalic anhydride, and 4,4'-carbonyldiphthalic anhydride; hydrogenated derivatives of phthalic acid such as hexahydrophthalic anhydride, 1,2,3,6-tetrahydrophthalic anhydride, 3,4,5,6-tetrahydrophthalic anhydride, hexahydro-4-methylphthalic anhydride, and methyltetrahydrophthalic anhydride; maleic anhydride and its derivatives, such as 2,3-dimethylmaleic anhydride, 2,3-diphenylmaleic anhydride, bromomaleic anhydride, and dichloromaleic anhydride; pyromellitic dianhydride; succinic anhydride and its derivatives, such as dodecenylsuccinic anhydride, and methylsuccinic anhydride; 1,2-cyclohexane dicarboxylic acid, nadic methyl anhydride (methyl-5-norbornene-2,3-dicarboxylic anhydride), *cis*-5-norbornene-*endo*-2,3-dicarboxylic anhydride, itaconic anhydride, 2,3-pyridinedicarboxylic anhydride, pyromellitic dianhydride, *endo*-bicyclo[2.2.2]oct-5-ene-2,3-dicarboxylic anhydride, 1,2,3,4,-cyclobutanetetracarboxylic dianhydride, and 1-cyclopentene-1,2-dicarboxylic anhydride. Preferred among these are phthalic anhydride and substituted derivatives of phthalic anhydride and hydrogenated derivatives of phthalic acid.

The reaction between the cyclic anhydride and the amine compound is preferably carried out with purified reactants and with an excess of the primary amine compound in order to minimize the polydispersity of the product. Thus, while a ratio of about one mole of the primary amine compound to about one mole of the anhydride is the stoichiometric ratio of the reactants, the reaction is preferably carried out using an excess of the amine compound. It is preferred to employ a ratio of at least about two moles, and preferably at least about three moles, of the primary amine compound per mole of the anhydride. In a particularly preferred embodiment, a ratio of about four moles of the primary amine compound is used per mole of the anhydride. For example, it is preferred to react a ratio of about four moles of distilled diethylenetriamine to about one mole of reagent-grade phthalic anhydride to form the latent primary amine compound. The excess amine compound is removed, for example by vacuum distillation, following completion of the reaction. For reasons that the person of skill in the art will appreciate, the ratio of moles of primary amine compound to anhydride should not be too high, and it is preferred that the ratio not exceed about eight moles, and preferably about six moles, of primary amine compound per mole of the anhydride. The product of the excess amine compound procedure is found to have a low concentration of, or to be free of, residual carboxylic acid groups. This is thought to indicate that the cyclic tetramide is preferentially formed over a linear product.

The reaction product of the amine compound and the cyclic anhydride may have a polydispersity of about 20, but lower polydispersities are preferred. The polydispersity is preferably less than about 5. More preferably, especially when the reaction product is then reacted to form the resin having latent amine functionality, the reaction product of the amine compound and the cyclic anhydride has a polydispersity of about 3 or less, still more preferably of about 2 or less, and even more preferably about 1.1 or less. Reaction products that have a polydispersity of about 1.05 or less are particularly preferred. The reaction product has at least two latent primary amine per molecule on average.

The crosslinkable resin compound of the invention has latent amine functionality that may be represented by the structure (Ia): 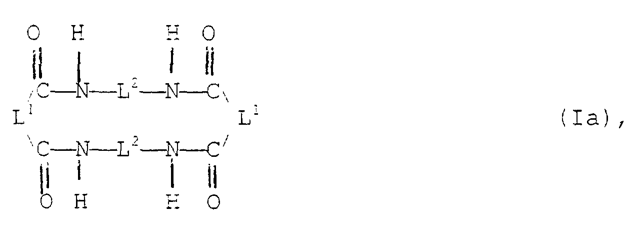 in which L¹ is a bivalent linking group in which the bonding valences, connecting to the carbon of the amide carbonyl, are on two adjacent carbon atoms and in which L² is a linking group with terminal carbon atoms. The adjacent, bonding carbon atoms of L¹ may be bonded to one another with a single bond (as for the product prepared using hexahydrophthalic anhydride), a double bond (as for the product prepared using maleic anhydride), or an aromatic bond (as for the product prepared using phthalic anhydride). Either or both of the adjacent bonding carbon atoms may carry a substituent or the adjacent bonding carbon atoms may be members of an aliphatic or aromatic ring, wherein the ring may itself be substituted at any available carbon atom. Thus, L¹ may have the various structures 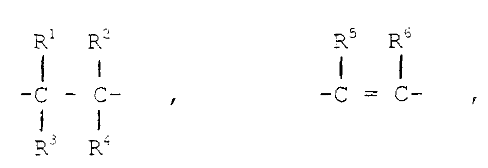 and 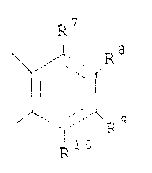 wherein R¹ through R¹⁰ may independently be selected from hydrogen; halides; alkyl, cycloalkyl, or aryl groups, including derivatives of these such as halogenated and sulfonated derivatives; or two R groups may together form a cyclic structure. L² is preferably an arylene, alkylene, or N,N'-dialkyleneamine group, with the alkylene groups having preferably about eight or fewer carbon atoms.

In the second step of the synthesis of the resin in which latent amine functionality is reacted onto a resin, the latent primary amine compound is reacted with a resin having at least one group reactive with the functionality of the latent primary amine compound. The resin used to form the latent amine resin can be any of a number of resins, including, without limitation, epoxy, acrylic, polyester, polyurethane, polyamide, and polybutadiene resins.

In a preferred embodiment, the resin having latent amine functionality that may be represented by the structure (Ib): 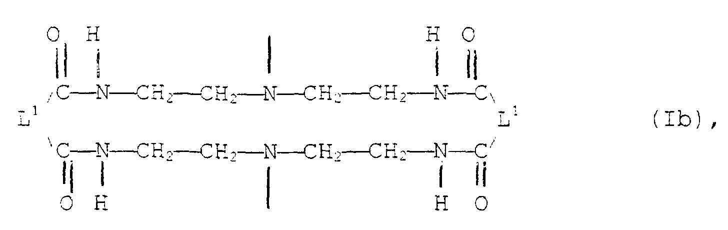 in which at least one of the amine nitrogens is covalently bonded to the resin and the other nitrogen is preferably a secondary amine (i.e., bonded to a hydrogen atom) or a derivative of a secondary amine (e.g., a urea group from reaction of the secondary amine with an isocyanate functional compound). The L¹ is a bivalent linking group as defined for structure Ia.

In a preferred embodiment, particularly when the coating composition is to be used as a primer, the resin has at least one epoxide group and is an epoxy resin, preferably a polyglycidyl ether. The preferred polyglycidyl ethers are polyglycidyl ethers of bisphenol A, bisphenol F, and similar polyphenols. Epoxy resins can be prepared, for example, by etherifying a polyphenol using an epihalohydrin, such as epichlorohydrin, in the presence of alkali. In a preferred embodiment, the epoxy resins are extended with polyphenol, such as bisphenol A, or with polyamine. The polyepoxide compound can be modified or extended, for example by reaction of the glycidyl groups with a polyphenol such as bisphenol A or with a polyamine such as those sold by BASF AG of Germany under the tradename POLYAMIN and under the tradename Jeffamine® by Huntsman Co. of Houston, TX. Preferred epoxy resins have a weight average molecular weight, which can be determined by GPC, of at least 3000 and up to 6000. Epoxy equivalent weights can range from 500 to 1900, and preferably from 800 to 1200.

Novolac epoxies are also suitable as a polyepoxide-functional resin that is reacted with the latent primary amine compound to produce the crosslinkable latent primary amine resin of the invention. The novolac epoxy resin may be epoxy phenol novolac resins or epoxy cresol novolac resins having the formula II : 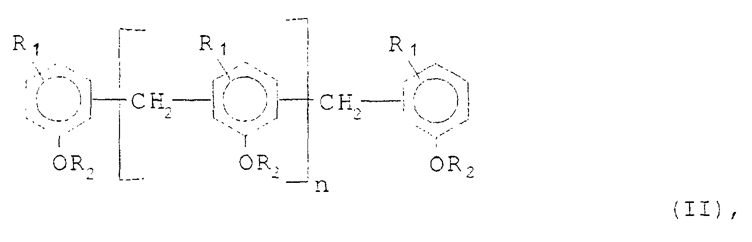 in which R₁ is H or methyl, R₂ may be H or a glycidyl group, with the proviso that on average at least two R₂ groups per molecule are glycidyl groups, and n is from 0 to 12, preferably from 3 to 8, and more preferably 3 or 4. The novolac resin may also be an aromatic novolac bisphenol A resin, having either the formula III 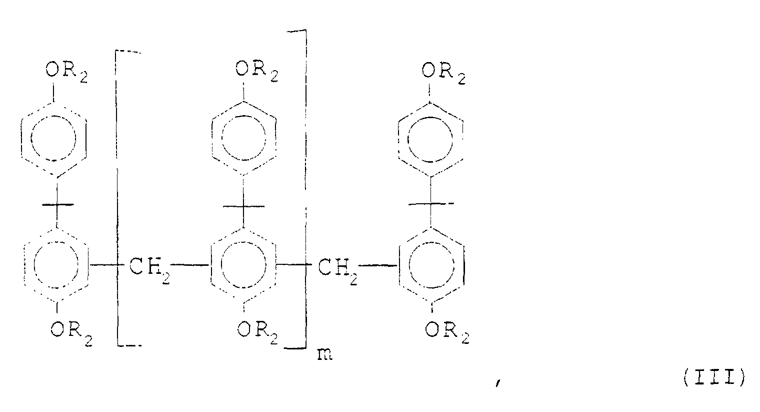 or the formula IV 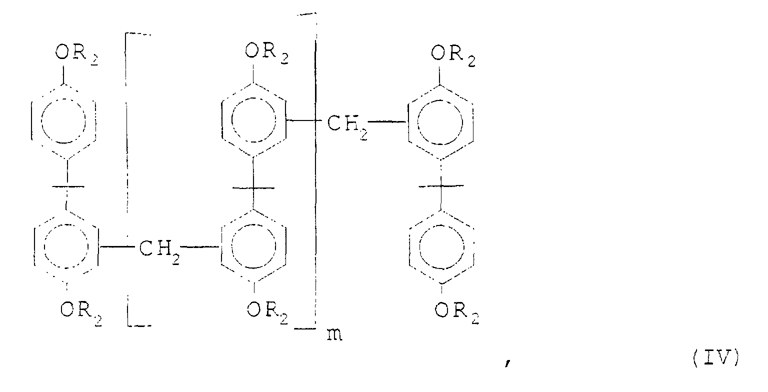 wherein, for each formula, R₂ may be H or a glycidyl group, with the proviso that on average at least two R₂ groups per molecule are glycidyl groups, and m is from 0 to 4, preferably from 0 to 2.

Acrylic polymers are preferred for use in topcoat compositions, including clearcoat or basecoat compositions. Acrylic polymers having at least one group reactive with the latent amine compound can be prepared from epoxide-functional monomers, such as glycidyl methacrylate, or isocyanate-functional monomers, such as isocyanatoethyl methacrylate, isopropenyl isocyanate, or meta-isopropenyl-α,α-dimethylbenzyl isocyanate. The monomers that have functional groups reactive with the latent amine compound are copolymerized with other monomers, such as esters and other derivatives of acrylic acid and methacrylic acid, for example methyl methacrylate, butyl methacrylate, cyclohexyl methacrylate, hydroxyethyl acrylate, hydroxybutyl acrylate, 2-ethylhexyl acrylate, n-butyl acrylate, and/or other monomers that are known to be copolymerizable with these such as vinyl esters, aromatic monomers such as styrene, and so on. The latent primary amine compound is reacted with the glycidyl or isocyanate groups of the acrylic resin. Other amine functionality can be incorporated in the acrylic polymers by copolymerization of a tertiary amine-containing acrylic monomer or by reaction of a polyamine with one or more of the isocyanate or epoxide groups.

Polyesters can also be used as the resin in the composition according to the invention. Polyesters may be prepared by the reaction of organic polycarboxylic acids (e.g., phthalic acid, hexahydrophthalic acid, adipic acid, maleic acid) or their anhydrides with organic polyols containing primary or secondary hydroxyl groups (e.g., ethylene glycol, butylene glycol, neopentyl glycol). Epoxide groups can be incorporated into polyesters by reacting a carboxylic acid-functional polyester with a molar excess of a polyepoxide compound. Isocyanate groups can be incorporated into polyesters by reacting a hydroxyl-functional polyester with a molar excess of a polyisocyanate (preferably a diisocyanate) compound. The epoxide or isocyanate groups can then be reacted with the latent amine reaction product to introduce the latent primary amine functionality.

Epoxy-modified polybutadiene, polyisoprene, amine-terminated butyl nitrile rubber, butadiene-acrylonitrile rubber, or other epoxy-modified rubber-based polymers can be used as the resin in the present invention.

At least one functional group, e.g., epoxide or isocyanate group, on the resin is reacted with a secondary amine of the product of the cyclic anhydride-amine compound reaction product in order to introduce the latent amine functionality. The reaction may be carried out at temperatures of, for example, about 65-75°C. The reaction temperature is preferably below the temperature at which the latent amine compound would be expected to decompose to regenerate primary amine functionality. If desired, other amine groups can be incorporated by reacting one or more reactive groups of the resin with a polyamine containing secondary and/or primary amines. In a preferred embodiment, one or more epoxide groups on an epoxide-functional resin are reacted with the latent amine compound. If desired, other latent amine groups can be incorporated by reacting one or more reactive groups of the resin with a compound comprising at least one primary amine group blocked by a ketimine. The ketimine will decompose at the temperatures at which the cyclic anhydride/amine reaction product decomposes to regenerate a primary amine that can be crosslinked by the carbonate curing agent. In a preferred embodiment for cathodic electrodeposition coatings, one or more epoxide groups on an epoxy resin are reacted with the latent amine compound and with a compound comprising a secondary amine group and at least one primary amine group blocked by a ketimine. The ketimine will decompose at the temperatures at which the cyclic anhydride/amine reaction product decomposes to regenerate a primary amine that can be crosslinked by the carbonate curing agent. When used in an electrodeposition coating composition, the ketimine will hydrolyze upon dispersion in water to regenerate a primary amine that can be salted to provide dispersion stability and can be crosslinked by the carbonate curing agent.

Polyurethanes can also be used as the resin in the present invention. Polyurethanes are prepared by the reaction of a polyisocyanate and a polyol. Examples of useful polyisocyanates include hexamethylene diisocyanate, toluene diisocyanate, methylenediphenyldiisocyanate (MDI), isophorone diisocyanate, and biurets and isocyanurates of these diisocyanates. Examples of useful polyols include low molecular weight aliphatic polyols, polyester polyols, polyether polyols, fatty alcohols, and the like. Aliphatic reactants are preferred for resins that will be incorporated into topcoat compositions. In the case of a polyurethane resin, the polyurethane can be synthesized with terminal isocyanate groups that can then be reacted with the secondary amine groups of the latent amine compound. Again, if desired, primary amine functionality can be included by reaction of an isocyanate group of the polyurethane with a compound comprising a secondary amine group and at least one latent primary amine group blocked by a ketimine.

When the resin having latent primary amine functionality is used in an electrocoating composition, the amount of primary amine vs. the amount of latent primary amine provided by the anhydride/amine compound reaction product can be balanced to provide a sufficient concentration of crosslinkable groups for good cure without excessively high bath conductivities. Resins used according to the invention preferably have an equivalent weight of functional groups available for crosslinking, which include primary amine groups and latent primary amine groups, at least about 300 eq/g and preferably up to about 500 eq/g. Resins used according to the invention also preferably have an equivalent weight of groups available for salting, which include primary amine groups, of at least about 1300 eq/g and preferably up to about 1500 eq/g.

It may be advantageous to include other functional groups such as hydroxyl groups on any of the above-described resins. These functional groups may serve as reaction sites for optional auxiliary crosslinkers such as aminoplast resins. Minor amounts of blocked isocyanate crosslinking agents may be included, for example up to about 10%, preferably up to about 5% by weight based on combined weight of crosslinking agents and resin. Techniques for incorporation of such groups is well-known in the art.

When used in electrocoat coating compositions, amine groups of the resin are at least partially salted, and may be fully salted, with an acid, such as acetic acid, lactic acid, or citric acid, to make a cationic resin on dispersion in an aqueous medium. The resin must carry a cationic charge to enable the resin to be electrodeposited onto the cathode of an electrodeposition cell.

In the case of an amine compound having more than about two available secondary amines for reaction with the resin, it may be desirable to reduce the number of secondary amine sites to two or less, for example by reacting the excess secondary amine groups before or during the reaction of the latent amine compound with the resin. For example, the excess secondary amine groups can be reacted with a monoisocyanate to form a urea-substituted compound.

The compositions of the invention further include at least one compound having a plurality of carbonate groups. The carbonate compound may comprise cyclic carbonate groups having various ring sizes as are known in the art, such as five-member cyclic carbonate rings, six-member cyclic carbonate rings, seven-member cyclic carbonate rings, or fused ring systems containing the characteristic -O-CO-O- carbonate moiety.

Cyclic carbonate compounds may be synthesized by any of several different approaches. One approach involves reacting an epoxy group-containing compound with CO₂, preferably under pressure with a catalyst. Useful catalysts include any that activate an oxirane ring, such as tertiary amine quaternary salts (e.g., tetramethyl ammonium bromide), tin and/or phosphorous complex salts (e.g., (CH₃)₃SnI, (CH₃)₄PI). Epoxides can also be reacted with β-butyrolactone in the presence of such catalysts. In another approach, a glycol, such as glycerin, may be reacted at temperatures of at least about 80°C (usually under reflux) with diethyl carbonate in the presence of a catalyst (e.g., potassium carbonate) to form a cyclic carbonate. Alternatively, a functional compound containing a ketal of a 1,2-diol having the structure: 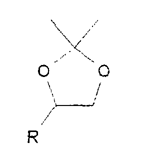 can be ring-opened with water at temperatures of at least 60°C, preferably with a trace amount of acid, to form a 1,2-glycol. As an alternative to reaction with diethyl carbonate, glycols can be reacted with phosgene in the presence of sodium hydroxide to form a cyclic carbonate. Five-member cyclic carbonate rings can be formed from 1,2-glycols. Six-member cyclic carbonate rings can be formed from 1,3-glycols. Fused rings may be formed, for example, by the reaction of phenol with phosgene to form phenylene carbonate. Cyclic carbonates typically have 5-6-member rings. Five-member rings are preferred, due to their ease of synthesis and to a greater degree of commercial availability.

In a preferred embodiment, compounds useful as the carbonate crosslinking agent are prepared by reaction of a polyepoxide with carbon dioxide to convert the epoxy groups to cyclic carbonate groups. Polyepoxides useful for preparing the carbonate crosslinking agents include, for example, any of the epoxide-functional resins described above. Monomeric or oligomeric polyepoxide materials are preferred. Among preferred compounds for synthesis of the curing agents of the invention are glycidyl ethers of polyols and glycidyl esters of polyacids. The polyepoxides can be reacted with carbon dioxide, as described above, to form the cyclic carbonate crosslinker.

The polyepoxide compound used to make the crosslinker may be any aliphatic or aromatic compound having at least two epoxide groups per molecule on average, and it is preferred to employ compounds that have from about 2 to about 4 epoxide groups per molecule on average. Examples of useful polyepoxide compounds include, without limitation, polyglycidyl ethers and esters, epoxy novolac resins, and epoxide-functional acrylics. In particular, the polyepoxide compound may be the polyglycidyl ether of aliphatic or aromatic polyols such as 1,4-butanediol, neopentyl glycol, cyclohexane dimethanol, diethylene glycol, polyethylene glycol, dipropylene glycol, polypropylene glycol, 2,2,4-trimethyl-1,3-pentanediol, 1,6-hexanediol, trimethylolpropane, trimethylolethane, glycerol, bisphenol A (4,4'-isopropylidenediphenol), hydroquinone, 4,4'-biphenol, 2,2'-biphenol, 4,4'-dihydroxybenzophenone, 1,5-dihydroxynaphthylene, novolac polyphenols, resorcinol, and similar compounds. In principle, the glycidyl ether of any polyol can be used. The polyepoxide compound is preferably a polyglycidyl ether of a polyphenol, and particularly preferably, it is the diglycidyl ether of bisphenol A. The polyepoxide compound could also be extended, as described above.

The polyepoxide could be a novolac epoxy resin, including epoxy phenol novolac resins, epoxy cresol novolac resins, or aromatic novolac bisphenol A resins, as described above. Although not all of the oxirane groups of the novolac resin must be converted to carbonate groups, it is preferred that all of the oxirane groups are converted to carbonate groups.

Polyglycidyl esters of polyacids are also useful in the present invention. Preferably, the polyglycidyl ester is the ester of a compound having two to about four carboxylic acid groups. Such esters include, without limitation, the diglycidyl esters of terephthalic acid, succinic acid, glutaric acid, 2,6-naphthylene dicarboxylic acid, and oxalic acid.

The range of useful epoxide equivalent weights for the polyepoxide compounds is broad, but in general it is preferred that the epoxide equivalent weight should be chosen to yield a sufficient crosslink density on curing to make a film that is strong and durable. In one preferred embodiment, the epoxide equivalent weight is from about 50 to about 500.

Cyclic carbonates with average functionality greater than about three are also contemplated and, in many cases, are preferred. Compounds having higher carbonate functionality may be obtained, for example, by reacting one mole of a diisocyanate such as isophorone diisocyanate with two moles of a polyol such as trimethylol propane to produce a tetrafunctional alcohol, which can be epoxidized with an epihalohydrin to produce a tetrafunctional polyepoxide. The tetrafunctional polyepoxide can in turn be reacted with carbon dioxide to form a tetrafunctional cyclic carbonate. Other higher-functionality polyepoxides, e.g., tetrakis(4-glycidyloxy-phenyl)ethane or the epoxide-functional novolac epoxies, may also be reacted with CO₂ to form poly-cyclic carbonates. Even substantially higher functionalities can be used, such as polymeric polyepoxides (e.g., epoxide-functional acrylic resins) converted to polymeric cyclic carbonate compounds, for which the functionality will be a function of the equivalent weight of the polymer.

One preferred class of cyclic carbonate compounds useful as the carbonate resin or crosslinking agent of the invention are compounds having an average of at least about four cyclic carbonate groups per molecule. In another preferred embodiment, each cyclic carbonate group is appended to an ether segment, for example a segment having at least one unit of propylene oxide. Such cyclic carbonate compounds may be prepared by reacting a polyether polyol with an epihalohydrin to convert the hydroxyl groups to epoxy groups. The polyether polyols may be based upon simple polyols having three or four hydroxyl groups, or mixtures of such compounds. Illustrative examples include, without limitation, trimethylolpropane, pentaerythritol, 1,2,6-trihydroxyhexane, xylose, adonitol, and so on. The epoxy groups may then be converted to cyclic carbonate groups by reaction with CO₂. Examples of useful polyether polyols include polypropylene glycols based on pentaerythritol and having up to 7 total polyether units.

One route for the preparation of cyclic ring carbonates can be represented by the formula: 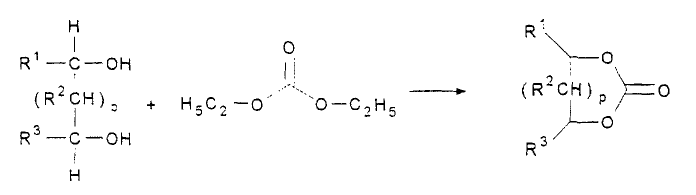 where p is 0 or a positive integer (preferably 0, 1, or 2) and R¹, R², and R³ are each independently H or an organic radical with the proviso that at least one of R¹, R², and R³ is an organic radical to which other cyclic carbonate groups can be attached or a group capable of bonding to an organic radical to which other cyclic carbonate groups can be attached.

In one preferred embodiment of the invention, the carbonate compounds are represented by the formula: 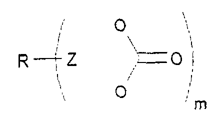 where R represents a polyvalent organic radical, and preferably a trivalent or tetravalent organic radical; Z represents the carbon atoms necessary to complete a substituted or unsubsrituted five-, six-, or seven-member cyclic carbonate ring; and m represents an integer of at least 2.

In another preferred embodiment of the invention, the carbonate compounds are represented by the formula: 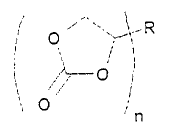 where R represents a polyvalent organic radical, and preferably a trivalent or tetravalent organic radical; and n is at least about two, more preferably at least about 3, and n is preferably up to about eight, more preferably up to about 6, and even more preferably up to about 4.

The coating compositions used in the practice of the present invention in which the compound with latent amine functionality has a structure (Ia) are preferably powder coating compositions or solventborne coating compositions. The coating composition may also be a powder coating composition or a solventborne coating composition when the material with latent amine functionality is a resin having attached thereto a structure (Ib). The concentration of the resinous products and carbonate crosslinkers by weight in the compositions, based on total resin solids, depends upon the particular application and materials chosen and can be determined by straightforward testing. Preferably, the coating compositions of the invention include at least about 40% by weight of the resin with latent amine functionality, preferably up to about 67% by weight of the resin with latent amine functionality, base on total resin solids. The coating compositions also include at least about 15% by weight of the carbonate functional crosslinker, preferably up to about 40% by weight of the carbonate functional crosslinker, based upon total resin solids.

The above components are uniformly mixed, optionally along with other ingredients to form a coating composition. Suitable other ingredients include organic solvents, antioxidants, UV absorbers, light stabilizers, pigments, fillers, catalysts, rheology control agents, adhesion promoters, and so forth. In general, a solvent may be used to prepare a composition that is in a substantially liquid state. Depending upon the solubility characteristics of the various coating components, a solvent may be selected from ketones, esters, glycol ethers and esters of glycol ethers, aprotic amides, aromatic solvents, and other solvents that are commonly utilized for coating compositions.

The coating composition of the invention may further contain one or more pigments. The pigments may be inorganic pigments, including metal oxides, chromates, molybdates, phosphates, and silicates. Examples of inorganic pigments that could be employed include without limitation, titanium dioxide, barium sulfate, carbon black, ocher, sienna, umber, hematite, limonite, red iron oxide, transparent red iron oxide, black iron oxide, brown iron oxide, chromium oxide green, strontium chromate, zinc phosphate, silicas such as fumed silica, talc, barytes, ferric ferrocyanide (Prussian blue), ultramarine, lead chromate, lead molybdate, and lead silicate. Organic pigments may also be used. Examples of useful organic pigments include, without limitation, metallized and non-metallized azo reds, quinacridone reds and violets, perylene reds, copper phthalocyanine blues and greens, carbazole violet, monoarylide and diarylide yellows, benzimidazolone yellows, tolyl orange, naphthol orange, and the like. Flake pigments such as metallic flake pigments and mica pigments are included when a metallic or pearlescent effect is desired. The preferred pigments depend upon the desired color of the coating. When the coating applied is a primer, extenders such as clay and anti-corrosion pigments are commonly included. The pigments may be dispersed using a grind resin or, preferably, a pigment dispersant, using methods well-known in the art.

The coating compositions of the invention may be thermally cured at a temperature sufficiently high to generate primary amine groups from the latent primary amine groups. Usually, the coating will be cured at a temperature of at least about 80°C, preferably at least about 100°C, and particularly preferably at least about 120°C. The curing time will vary depending on the particular components used, and physical parameters such as the thickness of the layers. Typical curing times range from 15 to 60 minutes. Unlike curing of systems with blocked isocyanate carbonate compounds or with alkylated melamine resins, the curing chemistry of the present invention does not involve release of a volatile organic by-product. Thus, the inventive compositions offer the significant advantages of producing lower emissions and of providing a higher conversion of paint solids into cured coating.

The compositions of the invention are typically applied at a sufficient thickness to produced a cured coating layer that is at least about 7.62 micrometer (0.3 mils) thick and preferably is less than about 127 micrometer (5.0 mils) thick. When the compositions of the invention are used as primers, thickness of cured coatings should typically be from about 12.7 (0.5) to about 38.55 micrometer (1.5 mils) thick. When the compositions of the invention are used as basecoats, thickness of cured coatings should typically be from about 10.16 (0.4) to about 33.02 micrometer(1.3 mils) thick. When the compositions of the invention are used as one coat topcoats or as clearcoats, thickness of cured coatings should typically be from about 20.32 (0.8) to about 63.5 micrometer (2.5 mils) thick.

The coating preparations according to the invention may be used to coat various kinds of substrates using any of a number of processes known to those skilled in the art, such as spraying, roll coating, and coil coating methods and so on. Preferably, the substrate is a plastic or metallic substrate. In a preferred embodiment, the substrate is an automotive component such as a body panel. The compositions of the invention are preferably employed as exterior automotive coatings. The substrate may have one or more layers of coating before the present compositions are applied, particularly when the composition according to the present invention is applied as a topcoat.

When the coating compositions of the invention are applied as a primer layer to a substrate, a pigmented resin coating and optionally a clearcoat layer may be applied over the primer layer. In automotive applications, the pigmented resin layer is often called a basecoat or color coat when a clearcoat layer is to be applied on top of it, or a topcoat when the pigmented resin coating is to be the outer layer. The resin in the pigmented resin layer can be of a number of resins known in the art. For example, the resin can be an acrylic, a polyurethane, or a polyester. Typical pigmented resin coating formulations are described in U.S. Patents 4,791,168, 4,414,357, and 4,546,046. In one preferred embodiment, the resin is an ε-caprolactone-modified acrylic resin, as described in U.S. Patent 4,720,528. The pigmented resin can be cured by any of the known mechanisms and carbonate compounds, such as a melamine polyol reaction (e.g., melamine cure of a hydroxy-functional acrylic resin).

Other pigmented basecoat compositions for such composite coatings are well-known in the art, and do not require explanation in detail herein. Polymers known in the art to be useful in basecoat compositions include acrylics, vinyls, polyurethanes, polycarbonates, polyesters, alkyds, and polysiloxanes. Preferred polymers include acrylics and polyurethanes. Basecoat polymers are preferably crosslinkable, and thus comprise one or more type of crosslinkable functional groups. Such groups include, for example, hydroxy, isocyanate, amine, epoxy, acid, anhydride, acrylate, vinyl, silane, and acetoacetate groups. These groups may be masked or blocked in such a way so that they are unblocked and available for the cross-linking reaction under the desired curing conditions, generally elevated temperatures. Preferred crosslinkable functional groups include hydroxy functional groups and amino functional groups.

Basecoat polymers may be self-crosslinkable, or may require a separate carbonate compound that is reactive with the functional groups of the polymer. When the polymer comprises hydroxy functional groups, for example, the carbonate compound may be selected from aminoplast resins, isocyanates and blocked isocyanates (including isocyanurates), and acid or anhydride functional cross-linking agents. Preferably, a clearcoat containing a vehicle having carbamate functionality, as for example a clearcoat according to U.S. Pat. No. 5,474,811, is applied wet-on-wet over a layer of a basecoat composition. The coatings applied over the electrocoat coating layer of the invention are applied and, preferably, crosslinked according to methods well-known in the art.

The coating having latent amine functionality can also be an electrocoat, or electrodepositable, coating composition. The electrodepositable coating compositions used in the practice of the present invention are dispersed in aqueous medium. The term "dispersion" as used within the context of the present invention refers to a two-phase translucent or opaque aqueous resinous system in which the resin is believed to be the dispersed or emulsified phase and water the continuous phase, although a minor portion of the resin may even be dissolved in the continuous phase. The average particle size diameter of the resinous phase is usually at least about 0.1 micrometer; the average particle size diameter may be up to about 10 micrometer, but preferably it is less than about 5 microns. The concentration of the resinous products by weight in the aqueous medium is, in general, not critical, but ordinarily the major portion of the aqueous dispersion is water. The aqueous dispersion usually contains at least about 3 percent, preferably at least about 10 percent, by weight resin solids; and the dispersion may contain up to about 50 percent, preferably up to about 35 percent, by weight resin solids. Aqueous resin concentrates that are to be further diluted with water generally may be at least about 10% by total weight solids and may be up to about 30 percent by total weight solids. In general, sufficient water is added so that the dispersion has a solids content of more than about 20% by weight, preferably more than about 30% by weight.

The above components are uniformly dispersed in an aqueous medium. Usually, the principal resin and the crosslinking agent are blended together before the resins are dispersed in the water. The salting acid may be blended with the resins, mixed with the water, or both, before the resins are added to the water. The acid is used in an amount sufficient to neutralize enough of the amine groups of the principal resin to impart water-dispersibility to the resin. The resin should be neutralized to a degree sufficient to prevent premature reaction of any primary amine groups with the cyclic carbonate groups on the crosslinking agent from adversely affecting the properties of the coating bath (typically at least 80%, and more preferably 90-100%). Examples of useful acids include phosphoric acid, acetic acid, propionic acid, citric acid, and lactic acid.

Besides water, the aqueous medium of an electrocoat composition may also contain a coalescing solvent. Useful coalescing solvents include hydrocarbons, alcohols, esters, ethers and ketones. The preferred coalescing solvents include alcohols, polyols and ketones. Specific coalescing solvents include monobutyl and monohexyl ethers of ethylene glycol, and phenyl ether of propylene glycol, monoalkyl ethers of ethylene glycol such as the monomethyl, monoethyl, monopropyl, and monobutyl ethers of ethylene glycol; dialkyl ethers of ethylene glycol such as ethylene glycol dimethyl ether; or diacetone alcohol. A small amount of a water-immiscible organic solvent such as xylene, toluene, methyl isobutyl ketone or 2-ethylhexanol may be added to the mixture of water and the water-miscible organic solvent. The amount of coalescing solvent is not unduly critical and is generally between about 0 to 15 percent by weight, preferably about 0.5 to 5 percent by weight based on total weight of the resin solids.

The electrodeposition coating composition may further contain conventional pigments such as titanium dioxide, ferric oxide, carbon black, aluminum silicate, precipitated barium sulfate, aluminum phosphomolybdate, strontium chromate, basic lead silicate or lead chromate. The pigments may be dispersed using a grind resin or, preferably, a pigment dispersant such as is disclosed by Carpenter et al. in U.S. Patent Nos. 5,527,614 and 5,536,776. The pigment-to-resin weight ratio in the electrocoat bath can be important and should be preferably less than 50:100, more preferably less than 40:100, and usually about 10 to 30:100. Higher pigment-to-resin solids weight ratios have been found to adversely affect coalescence and flow.

The electrodeposition coating compositions can contain optional ingredients such as wetting agents, surfactants, defoamers, antioxidants, UV absorbers, light stabilizers, and so forth. Examples of surfactants and wetting agents include alkyl imidazolines such as those available from Ciba-Geigy Industrial Chemicals as Amine C®, acetylenic alcohols available from Air Products and Chemicals as Surfynol® 104. These optional ingredients, when present, constitute from about 0 to 20 percent by weight based on resin solids. Plasticizers may be included, for example to promote flow and coalescing of the film. Preferred plasticizers include the products of polyethers, such as poly(ethylene oxide) or poly(propylene oxide), with phenolic compounds such as nonyl phenols, p-cresol, or bisphenol A. Plasticizers are usually included at levels of about 0 to 15 percent by weight resin solids.

The electrodeposition coating composition should have an electroconductivity of at least about 1200 microohms. While higher conductivities are possible, the conductivity should preferably be 3000 microohms or less, more preferably about 2000 microohms or less. When conductivity is too low, it is difficult to obtain a film thickness having desired protective and other functions. Conversely, if the composition is too conductive, problems such as the dissolution of the coated film or film rupture during deposition may arise.

Electrodeposition of the coating preparations according to the invention may be carried out by any of a number of processes known to those skilled in the art. The deposition may be carried out on all electrically conducting substrates, for example metal, such as steel, copper, aluminum and the like.

The electrodeposition coating composition used in this invention may be applied on a conductive substrate to a dry film thickness of 15 to 35 micrometer. After application, the coating may be cured at a temperature sufficiently high to generate primary amine groups from the latent primary amine groups. Usually, the coating will be cured at a temperature of at least about 80°C, preferably at least about 100°C, and particularly preferably at least about 120°C. The curing time will vary depending on the particular components used, and physical parameters such as the thickness of the layers, however, typical curing times range from 15 to 60 minutes.

Unlike curing of systems with blocked isocyanate crosslinkers or with alkylated melamine resins, the curing chemistry of the present invention does not involve release of a volatile organic by-product. Thus, the inventive compositions offer the significant advantages of producing lower emissions and of providing a higher conversion of bath solids into cured coating.

According to the invention, a pigmented resin coating and optionally a clearcoat layer may be applied over the electrocoat primer layer, as described above. The electrocoat primer layer may optionally be coated first with a second primer layer by spray application.

The invention is further described in the following example. The example is merely illustrative and does not in any way limit the scope of the invention as described and claimed. All parts are parts by weight unless otherwise noted.

### Synthesis 1: Preparation of Latent Amine Compound

A latent amine compound was prepared according to Example 2 of Moran, Jr., et al., U.S. Patent No. 3,639,657. The product had a number average molecular weight of 326 and a weight average molecular weighs of 4973, as measured by GPC against a polystyrene, thus having a polydispersity of about 15.2. The amine equivalent weight was determined by titration with 0.1N HCl to be 7.5 meq. base per gram of resin solids.

### Synthesis 2: Preparation of Latent Amine Compound

A 1-liter glass flask was charged with 340 grams of fresh diethylenetriamine. The diethylenetriamine was heated to about 90°C under a nitrogen blanket. A total of 122.3 grams of phthalic anhydride (ACS grade, >99.5%) was added over a period of about 20 minutes. The reaction mixture was held at 100°C for two hours. The reaction mixture was then vacuum stripped. The residue (165.5 grams) was ground, washed with three 350-ml portions of THF, then dried in the oven. The product (about 150 grams) had a number average molecular weight of 143 and a weigh average molecular weight of 154, as measured by GPC. The amine equivalent weight was determined by titration to be 164 eq./gram.

### Synthesis 3: Preparation of Carbonate Compound

A stainless steel pressure reactor was charged with 270.0 grams of a tetraglycidyl ether (reaction product of pentaerythritol, propylene oxide, and epichlorohydrin having a weight per epoxide of 169.5) and 5.0 grams of tetrabutylammonium bromide. The contents of the reactor were heated to 105°C under a steady stream of carbon dioxide gas. The system was then pressurized with carbon dioxide to a pressure of 8.274 bar (120 psi) and this pressure was maintained by addition of CO₂ as needed through the remained of the reaction. The reaction mixture was held under these conditions for 7 hours, at which time the heat was turned off and the reaction mixture was left to cool for 14 hours. Analysis by titration of epoxide groups indicated that the reaction was complete.

### Example 1: Preparation of Coating Composition

The latent amine compound of Synthesis 2 was reduced to 50% solids in methanol. A 7.2-gram portion of the reduced latent amine compound was blended with 5.0 grams of the carbonate crosslinker of Synthesis 3 (equivalent ratio of 1:1). The mixture was drawn down on a glass plate at a wet film thickness of 10.16 micrometer (4 mils). The methanol was allowed to evaporate for 5 minutes at room temperature, and then the drawdown was baked for 30 minutes at 165.55°C (330°F). The cured film was a clear yellow and had an MEK solvent resistance of 50 rubs.

### Synthesis 4: Preparation of Latent Amine Resin

A suitable reaction vessel was charged with 128.6 grams of the diglycidyl ether of bisphenol A, 39.0 grams of bisphenol A, and 10.0 grams of xylene. The vessel was heated to 125°C and 0.2 grams of triphenylphosphine catalyst was added. The reaction mixture was held at 150°C until a weight per epoxide of 494 grams/equivalent was reached. The resin product was then reduced with an addition of 117.0 grams of butyl glycol. The temperature of the resin was reduced to 85°C, at which temperature 43.4 grams of the diketimine of diethylenetriamine (70% in methyl isobutyl ketone) were added. Then, 61.5 grams of the latent amine compound of Synthesis 2 were added. The temperature was held at about 80°C for three hours. The resin was then reduced with 50 grams of xylene and 50 grams of butyl glycol.

### Example 2: Preparation of Coating Composition

A 5.0-gram portion of the latent amine resin of Synthesis 4 was mixed with 2.4 grams of the carbonate crosslinker of Synthesis 3. The resulting composition was drawn down on a glass as a 4.0 mils-thick wet film and then baked for 30 minutes at 110°C (230°F). The resulting film was clear and had an MEK resistance of 50 rubs.

### Synthesis 5: Preparation of Latent Amine Resin

A suitable reaction vessel is charged with 250.7 grams of the diglycidyl ether of bisphenol A, 76.0 grams of bisphenol A, and 17.2 grams of xylene. The vessel is heated to 125°C and 0.25 grams of triphenylphosphine catalyst is added. The reaction mixture is held at 150°C until a weight per epoxide of about 500 grams/equivalent is reached. The resin product is then reduced with an addition of 24.0 grams of ethylene glycol monobutyl ether, 36.8 grams of xylene, 100 grams of isobutanol and cooled to about 50°C. Then, 177 grams of the latent amine compound of Synthesis 2 is added. The temperature is held at about 60°C for three hours.

### Synthesis 6: Preparation of Carbonate Crosslinker

A 5-liter stainless steel pressure reactor was charged with 398.0 grams of a tetraglycidyl ether (reaction product of pentaerythritol, propylene oxide, and epichlorohydrin having a weight per epoxide of 169.5). A total of 2.5 grams of tetrabutylammonium bromide were added. The contents of the reactor were heated to 100°C. After a short purge of the reactor with a steady stream of carbon dioxide gas, the system was sealed and carbon dioxide gas was introduced to a pressure of 8.106 bar (8 atm). The reaction mixture was held under these conditions for 14 hours, at which time analysis by infrared spectroscopy indicated that the reaction was complete. The resin product was 99.8% nonvolatile and had a viscosity of 6.8 Pa.s(6800 centipoise).

### Example 3: Preparation of Electrocoat Emulsion

A 1-liter glass flask was charged with a mixture of 256.5 grams of the diglycidyl ether of bisphenol A, 58.6 grams of bisphenol A, 56.1 grams of dodecylphenol, and 20.3 grams of xylene. The mixture was heated to 125°C, and then 0.9 gram of dimethylbenzylamine was added. An exothermic reaction raised the temperature of the reaction mixture to 168°C. The mixture was then cooled, and an additional 0.4 gram of dimethylbenzylamine was added. The reaction mixture was held at 133°C for 3 hours, at which time the weight per epoxide was determined to be 950 grams polymer per equivalent epoxide. The reaction temperature was reduced to 10°C, and 18.9 grams of propoxylated *p*-cresol plasticizer (Synfac 8100, available from Milliken Chemical, Spartanburg, SC), 15.4 grams of propylene glycol monophenyl ether, and 8.7 grams of butylglycol were added. At 96°C, 36.7 grams of the diketimine of diethylenetriamine (70% solution in methyl isobutyl ketone) were added. The reaction mixture was cooled to 75°C over one hour, and then 92 grams of the latent amine compound of Synthesis 2 were added. After 15 minutes of stirring, 65.3 grams of isobutanol, 72.5 grams of butylglycol, 1.5 grams of Surfynol 104 BC (available from Air Products Co., Allentown, PA), and 2.0 grams of an anti-cratering agent were added. The temperature was held at 75°C for 2 hours. The resulting resin solution was 72% solids.

A suitable container was charged with 500.0 grams of the resin solution (60°C). The resin was mixed for five minutes with 17.5 grams of lactic acid. Then, 145 grams of the carbonate crosslinker of Synthesis 6 were added and mixing was continued for fifteen minutes. The mixture was emulsified by the gradual addition of 2242 grams of deionized water and 21.8 grams of 86% lactic acid with good stirring. The resulting emulsion was 17% solids and had a particle size of 134 nm.

### Example 4: Preparation of Electrocoat Emulsion

A 1-liter glass flask was charged with a mixture of 64.3 grams of the diglycidyl ether of bisphenol A, 19.5 grams of bisphenol A, and 5.0 grams of xylene. The mixture was heated to 125°C, and then 0.1 gram of triphenylphosphine was added. An exothermic reaction raised the temperature of the reaction mixture to 164°C. The mixture was then cooled and held at 150°C for one hour, at which time the weight per epoxide was determined to be 490 grams polymer per equivalent epoxide. The reaction temperature was reduced to 145°C, and 58.5 grams of butylglycol were added. At 85°C, 21.7 grams of the diketimine of diethylenetriamine (70% solution in methyl isobutyl ketone) were added. The reaction mixture held at the temperature for about one hour, and then 37.7 grams of the latent amine compound of Synthesis 2 were added. The temperature was held at 85-90°C for about four hours. The resulting resin solution was 60% solids.

A suitable container was charged with 170.0 grams of the resin solution along with 33.4 grams of the carbonate crosslinker of Synthesis 6. Then 3.6 grams of acetic acid were added and the mixture was emulsified by the gradual addition of 356.7 grams of deionized water with good stirring. The resulting emulsion was 18% solids and had a particle size of 154 nm.

An electrocoat bath is prepared by added a pigment paste (60% nonvolatiles by weight, pigment-to-binder ratio of 3.5, with TiO₂, carbon black, and a clay extender) to the emulsion, and then reducing the pigmented emulsion to the final desired nonvolatiles by adding deionized water. The coating is electrodeposited onto the metallic substrate (cathode) at about 100 volts to a thickness of about 12.7 micrometer (0.5 mils). The deposited film is baked at 176.66°C (350°F) for about twenty minutes to crosslink the film to an intractable, insoluble coating film.

The invention has been described in detail with reference to preferred embodiments thereof.

## Claims

1. A coating composition comprising:
(a) a compound with latent primary amine functionality comprising the latent amine reaction product of:
(i) a cyclic anhydride and
(ii) a amine compound comprising two primary amine groups and one secondary amine group;
and
(b) a compound comprising a plurality of cyclic carbonate groups.

2. A coating composition comprising:
(a) a latent amine-functional resin comprising the reaction product of:
(i) a resin having a functional group reactive with a secondary amine and
(ii) a latent amine reaction product of
(A) a cyclic anhydride and
(B) a amine compound comprising two primary amine groups and one secondary amine group;
and
(b) a compound comprising a plurality of cyclic carbonate groups.

3. A coating composition comprising, in an aqueous medium,
(a) a cationic resin having latent amine functionality, comprising the reaction produce of:
(i) a resin having a functional group reactive with a secondary amine and
(ii) a latent amine reaction product of
(A) a cyclic anhydride and
(B) a amine compound comprising two primary amine groups and one secondary amine group;
and
(b) a compound comprising a plurality of cyclic carbonate groups.

4. A coating composition according to claim 1, wherein the compound (b) is a carbonated polyepoxide resin.

5. A coating composition according to claim 2 or claim 3, wherein the resin (a)(i) is a polyepoxide resin.

6. A coating composition according to claim 4 or claim 5, wherein the polyepoxide resin is selected from the group consisting of epoxy resins, acrylic resins, and mixtures thereof.

7. A coating composition according to claim 5, wherein the resin (a)(i) is a polyepoxide formed by reacting an excess of a polyglycidyl ether of a polyphenol with an extender compound having at least two epoxide-reactive groups.

8. A coating composition according to claim 6, wherein the polyepoxide resin is a bisphenol A-based epoxy resin.

9. A coating composition according to claim 7, wherein the extender compound is selected from the group consisting of alkoxypolyamines, polyphenols, and mixtures thereof.

10. A coating composition according to claim 4, wherein the polyepoxide resin is the polyglycidyl ether reaction product of a polyol, an alkylene oxide, and epichlorohydrin.

11. A coating composition according to any of claims 1-10, wherein the latent amine reaction product has a polydispersity of about 3 or less.

12. A coating composition according to any of claims 1-11, wherein the latent amine reaction product has a polydispersity of about 1.1 or less.

13. A coating composition according to any of claims 1-12, wherein the latent amine reaction product has a polydispersity of about 1.05 or less.

14. A coating composition according to any of claims 1-13, wherein the latent amine reaction product is formed by reacting a molar excess of the amine compound with the cyclic anhydride.

15. A coating composition according to claim 14, wherein there is a ratio of at least about four moles of amine compound for each mole of cyclic anhydride.

16. A coating composition according to any of claims 1-15, wherein the cyclic anhydride is selected from the group consisting of phthalic anhydride compounds, hydrogenated phthalic anhydride compounds, succinic anhydride compounds, and maleic anhydride compounds.

17. A coating composition according to any of claims 1-16, wherein the amine compound is a polyalkylene polyamine.

18. A coating composition according to any of claims 1-18, wherein the latent amine reaction product is the reaction product of a ratio of at least about four moles of diethylenetriamine per mole of phthalic anhydride.

19. A coating composition according to claim 3, wherein the cationic resin (a) comprises at least partially salted primary amine groups.

20. A coating composition according to claim 20, wherein said cationic resin (a) is the reaction product of a resin (a)(i) having a plurality of functional groups reactive with a secondary amine with the latent amine reaction product (a) (ii) and
(a)(iii) a compound comprising a secondary amine group and at least one ketimine group.

21. A coating composition according to claim 2, wherein latent amine-functional resin (a) is the reaction product of a resin (a)(i) having a plurality of functional groups reactive with a secondary amine with the latent amine reaction product (a)(ii) and
(a)(iii) a compound comprising a secondary amine group and at least one ketimine group.

22. A coating composition according to any claims 1-3, wherein the compound (b) has at least about three cyclic carbonate groups per molecule, on average.

23. A coating composition comprising
(a) a compound having a structure 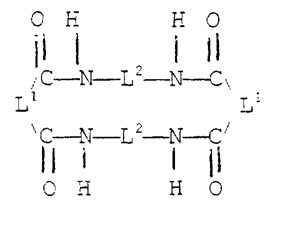 wherein L¹ is a bivalent linking group in which the bonding valences are on two adjacent carbon atoms, and further wherein L² is selected from the group consisting of arylene, alkylene, and N,N'-dialkyleneamine groups;
and
(b) a compound comprising a plurality of cyclic carbonate groups.

24. A coating composition comprising
(a) a resin comprising a structure 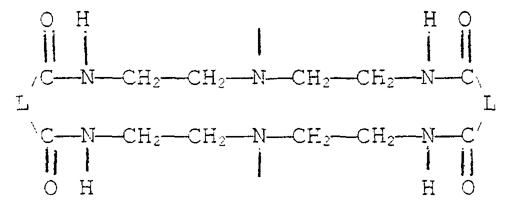 wherein at least one of the amine nitrogens is covalently bonded to the resin, and further wherein L is a bivalent linking group in which the bonding valences are on two adjacent carbon atoms; and
(b) a compound comprising a plurality of cyclic carbonate groups.

25. A coating composition comprising, in an aqueous medium,
(a) a cationic resin comprising a structure 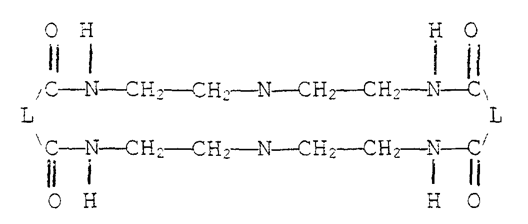 wherein at least one of the amine nitrogens is covalently bonded to the principal resin, and further wherein L is a bivalent linking group in which the bonding valences are on two adjacent carbon atoms;
and
(b) a compound comprising a plurality of cyclic carbonate groups.

26. A substrate having thereon a coating derived from a composition according to any of claims 1-26.

27. A method of coating a conductive substrate, comprising the steps of:
(a) providing an aqueous coating composition comprising a cationic resin having latent primary amine functionality and a curing agent having a plurality of cyclic carbonate groups, wherein said latent primary amine functionality is obtained by reacting
(i) a cyclic anhydride and
(ii) a amine compound comprising two primary amine groups and one secondary amine group;
(b) immersing a conductive substrate in said electrodeposition coating composition; and
(c) applying a potential of electric current between an anode and the conductive substrate to deposit a coating layer onto the conductive substrate.

28. A method according to claim 28, wherein said cationic resin is an epoxy resin.

29. A method according to claim 28, wherein the reaction product of (a) (i) and (a) (ii) has a polydispersity of about 1.1 or less.

30. A cationic resin formed by the process comprising the steps of:
(a) reacting a cyclic anhydride and an amine compound comprising two primary amine groups and one secondary amine group to form a latent amine compound;
(b) reacting the latent amine compound with a resin having at least one group reactive with secondary amine functionality; and
(c) salting the resin with an acid.

## Patentansprüche

1. Beschichtungszusammensetzung, enthaltend:
(a) eine Verbindung mit latenter primärer Aminfunktionalität, die das latentes Amin aufweisende Umsetzungsprodukt aus:
(i) einem cyclischen Anhydrid und
(ii) einer Aminverbindung mit zwei primären Amingruppen und einer sekundären Amingruppe
umfaßt,
und
(b) eine Verbindung mit mehreren cyclischen Carbonatgruppen.

2. Beschichtungszusammensetzung, enthaltend:
(a) ein latent aminfunktionelles Harz, das das Umsetzungsprodukt aus
(i) einem Harz mit einer gegenüber einem sekundären Amin reaktiven funktionellen Gruppe und
(ii) einem latentes Amin aufweisenden Umsetzungsprodukt aus
(A) einem cyclischen Anhydrid und
(B) einer Aminverbindung mit zwei primären Amingruppen und einer sekundären Amingruppe
enthält,
und
(b) eine Verbindung mit mehreren cyclischen Carbonatgruppen.

3. Beschichtungszusammensetzung, enthaltend in einem wäßrigen Medium
(a) ein kationisches Harz mit latenter Aminfunktionalität, das das Umsetzungsprodukt aus:
(i) einem Harz mit einer gegenüber einem sekundären Amin reaktiven funktionellen Gruppe und
(ii) einem latentes Amin aufweisenden Umsetzungsprodukt aus
(A) einem cyclischen Anhydrid und
(B) einer Aminverbindung mit zwei primären Amingruppen und einer sekundären Amingruppe
umfaßt,
und
(b) eine Verbindung mit mehreren cyclischen Carbonatgruppen.

4. Beschichtungszusammensetzung nach Anspruch 1, bei der es sich bei Verbindung (b) um ein carboniertes Polyepoxidharz handelt.

5. Beschichtungszusammensetzung nach Anspruch 2 oder 3, bei der es sich bei dem Harz (a) (i) um ein Polyepoxidharz handelt.

6. Beschichtungszusammensetzung nach Anspruch 4 oder 5, bei der das Polyepoxidharz aus der Gruppe bestehend aus Epoxidharzen, Acrylharzen und Mischungen davon ausgewählt ist.

7. Beschichtungszusammensetzung nach Anspruch 5, bei der es sich bei dem Harz (a)(i) um ein durch Umsetzung eines Überschusses eines Polyglycidylethers eines Polyphenols mit einer Kettenverlängerungsverbindung mit mindestens zwei gegenüber Epoxid reaktiven Gruppen erhaltenes Polyepoxid handelt.

8. Beschichtungszusammensetzung nach Anspruch 6, bei der es sich bei dem Polyepoxidharz um ein auf Bisphenol A basierendes Epoxidharz handelt.

9. Beschichtungszusammensetzung. nach Anspruch 7, bei der die Kettenverlängerungsverbindung aus der Gruppe bestehend aus Alkoxypolyaminen, Polyphenolen und Mischungen davon ausgewählt ist.

10. Beschichtungszusammensetzung nach Anspruch 4, bei der es sich bei dem Polyepoxidharz um das Polyglycidylether-Umsetzungsprodukt aus einem Polyol, einem Alkylenoxid und Epichlorhydrin handelt.

11. Beschichtungszusammensetzung nach einem der Ansprüche 1-10, bei der das latentes Amin aufweisende Umsetzungsprodukt eine Uneinheitlichkeit von etwa 3 oder weniger aufweist.

12. Beschichtungszusammensetzung nach einem der Ansprüche 1-11, bei der das latentes Amin aufweisende Umsetzungsprodukt eine Uneinheitlichkeit von etwa 1,1 oder weniger aufweist.

13. Beschichtungszusammensetzung nach einem der Ansprüche 1-12, bei der das latentes Amin aufweisende Umsetzungsprodukt eine Uneinheitlichkeit von etwa 1,05 oder weniger aufweist.

14. Beschichtungszusammensetzung nach einem der Ansprüche 1-13, bei der das latentes Amin aufweisende Umsetzungsprodukt durch Umsetzung eines molaren Überschusses der Aminverbindung mit dem cyclischen Anhydrird hergestellt wird.

15. Beschichtungszusammensetzung nach Anspruch 14, bei der ein Verhältnis von mindestens etwa vier mol Aminverbindung pro mol cyclischem Anhydrid vorliegt.

16. Beschichtungszusammensetzung nach einem der Ansprüche 1-15, bei dem das cyclische Anhydrid aus der Gruppe bestehend aus Phthalsäureanhydridverbindungen, hydrierten Phthalsäureanhydridverbindungen, Bernsteinsäureanhydridverbindungen und Maleinsäureanhydridverbingungen ausgewählt ist.

17. Beschichtungszusammensetzung nach einem der Ansprüche 1-16, bei der es sich bei der Aminverbindung um ein Polyalkylenpolyamin handelt.

18. Beschichtungszusammensetzung nach einem der Ansprüche 1-17, bei der es sich bei dem latentes Amin aufweisenden Umsetzungsprodukt um das Umsetzungsprodukt eines Verhältnisses von mindestens etwa vier mol Diethylentriamin pro mol Phthalsäureanhydrid handelt.

19. Beschichtungszusammensetzung nach Anspruch 3, bei der das kationische Harz (a) zumindest teilweise mit Säure in die Salzform überführte primäre Amingruppen enthält.

20. Beschichtungszusammensetzung nach Anspruch 20, bei der es sich bei dem kationischen Harz (a) um das Umsetzungsprodukt aus einem Harz (a)(i) mit mehreren gegenüber einem sekundären Amin reaktiven funktionellen Gruppen und dem latentes Amin aufweisenden Umsetzungsprodukt (a)(ii) und
(a)(iii) einer Verbindung mit einer sekundären Amingruppe und mindestens einer Ketimingruppe
handelt.

21. Beschichtungszusammensetzung nach Anspruch 2, bei der es sich bei dem latent aminfunktionellen Harz (a) um das Umsetzungsprodukt aus einem Harz (a) (i) mit mehreren gegenüber einem sekundären Amin reaktiven funktionellen Gruppen und dem latentes Amin aufweisenden Umsetzungsprodukt (a)(ii) und
(a)(iii) einer Verbindung mit einer sekundären Amingruppe und mindestens einer Ketimingruppe
handelt.

22. Beschichtungszusammensetzung nach einem der Ansprüche 1-3, bei dem die Verbindung (b) pro Molekül durchschnittlich mindestens etwa drei cyclische Carbonatgruppen aufweist.

23. Beschichtungszusammensetzung, enthaltend
(a) eine Verbindung mit der Struktur 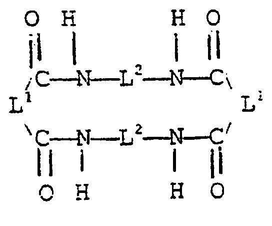 worin L¹ für eine zweiwertige verbrückende Gruppe, in der die Bindungsvalenzen sich an zwei benachbarten Kohlenstoffatomen befinden, steht und L² aus der Gruppe bestehend aus Arylen-, Alkylen- und N,N'-Dialkylenamingruppen ausgewählt ist,
und
(b) eine Verbindung mit mehreren cyclischen Carbonatgruppen.

24. Beschichtungszusammensetzung, enthaltend
(a) ein Harz mit einer Struktur 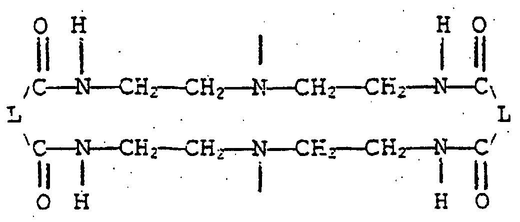 worin mindestens eines der Aminstickstoffatome kovalent an das Harz gebunden ist und L für eine zweiwertige verbrückende Gruppe, in der die Bindungsvalenzen sich an zwei benachbarten Kohlenstoffatomen befinden, steht,
und
(b) eine Verbindung mit mehreren cyclischen Carbonatgruppen.

25. Beschichtungszusammensetzung, enthaltend in einem wäßrigen Medium
(a) ein kationisches Harz mit einer Struktur 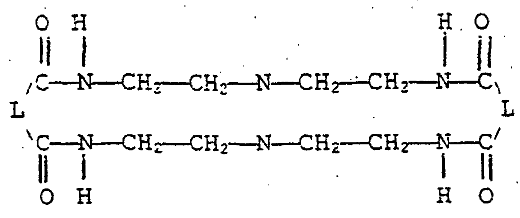 worin mindestens eines der Aminstickstoffatome kovalent an das Grundharz gebunden ist und L für eine zweiwertige verbrückende Gruppe, in der die Bindungsvalenzen sich an zwei benachbarten Kohlenstoffatomen befinden, steht,
und
(b) eine Verbindung mit mehreren cyclischen Carbonatgruppen.

26. Substrat mit einem Überzug, der sich von einer Zusammensetzung nach einem der Ansprüche 1 bis 25 ableitet.

27. Verfahren zum Beschichten eines leitfähigen Substrats, bei dem man
(a) eine wäßrige Beschichtungszusammensetzung, die ein kationisches Harz mit latenter primärer Aminfunktionalität und einen Härter mit mehreren cyclischen Carbonatgruppen enthält, wobei die latente primäre Aminfunktionalität durch Umsetzung von
(i) einem cyclischen Anhydrid mit
(ii) einer Aminverbindung mit zwei primären Amingruppen und einer sekundären Amingruppe
erhalten wird, bereitstellt,
(b) ein leitfähiges Substrat in die Elektrotauchlackzusammensetzung eintaucht und
(c) zur Abscheidung einer Überzugsschicht auf dem leitfähigen Substrate zwischen einer Anode und dem leitfähigen Substrat eine elektrische Spannung anlegt.

28. Verfahren nach Anspruch 27, bei dem es sich bei dem kationischen Harz um ein Epoxidharz handelt.

29. Verfahren nach Anspruch 27, bei dem das Umsetzungsprodukt aus (a)(i) und (a)(ii) eine Uneinheitlichkeit von etwa 1,1 oder weniger aufweist.

30. Kationisches Harz, hergestellt nach dem Verfahren, bei dem man
(a) ein cyclisches Anhydrid mit einer Aminverbindung mit zwei primären Amingruppen und einer sekundären Amingruppe zu einer latentes Amin aufweisenden Verbindung umsetzt,
(b) die latentes Amin aufweisende Verbindung mit einem Harz mit mindestens einer gegenüber sekundärer Aminfunktionalität reaktiven Gruppe umsetzt und
(c) das Harz mit einer Säure in die Salzform überführt.

## Revendications

1. Composition de revêtement comprenant :
(a) un composé renfermant une fonction amine primaire latente comprenant le produit de réaction amine latente de :
(i) un anhydride cyclique et
(ii) un composé amine renfermant deux groupes amine primaires et un groupe amine secondaire ;
et
(b) un composé renfermant plusieurs groupes carbonate cycliques.

2. Composition de revêtement comprenant :
(a) une résine à fonction amine latente comprenant le produit de réaction de :
(i) une résine renfermant un groupe fonctionnel réactif vis-à-vis d'une amine secondaire et
(ii) un produit de réaction amine latente de
(A) un anhydride cyclique et
(B) un composé amine renfermant deux groupes amine primaires et un groupe amine secondaire ;
et
(b) un composé renfermant plusieurs groupes carbonate cycliques.

3. Composition de revêtement comprenant, dans un milieu aqueux,
(a) une résine cationique renfermant une fonction amine latente, comprenant le produit de réaction de :
(i) une résine renfermant un groupe fonctionnel réactif vis-à-vis d'une amine secondaire et
(ii) un produit de réaction amine latente de
(A) un anhydride cyclique et
(B) un composé amine renfermant deux groupes amine primaire et un groupe amine secondaire ;
et
(b) un composé renfermant plusieurs groupes carbonate cycliques.

4. Composition de revêtement selon la revendication 1, dans laquelle le composé (b) est une résine de polyépoxyde carbonatée.

5. Composition de revêtement selon la revendication 2 ou la revendication 3, dans laquelle la résine (a) (i) est une résine de polyépoxyde.

6. Composition de revêtement selon la revendication 4 ou la revendication 5, dans laquelle la résine de polyépoxyde est choisie parmi le groupe constitué de résines époxy, de résines acryliques et de leurs mélanges.

7. Composition de revêtement selon la revendication 5, dans laquelle la résine (a)(i) est un polyépoxyde formé par réaction d'un excès d'un éther polyglycidylique d'un polyphénol avec un composé allongeur renfermant au moins deux groupes réactifs vis-à-vis d'un époxyde.

8. Composition de revêtement selon la revendication 6, dans laquelle la résine de polyépoxyde est une résine époxy à base de bisphénol A.

9. Composition de revêtement selon la revendication 7, dans laquelle le composé allongeur est choisi parmi le groupe constitué d'alcoxypolyamines, de polyphénols et de leurs mélanges.

10. Composition de revêtement selon la revendication 4, dans laquelle la résine de polyépoxyde est le produit de réaction éther polyglycidylique d'un polyol, d'un oxyde d'alkylène et de l'épichlorhydrine.

11. Composition de revêtement selon l'une quelconque des revendications 1 à 10, dans laquelle le produit de réaction amine latente présente une polydispersité d'environ 3 ou moins.

12. Composition de revêtement selon l'une quelconque des revendications 1 à 11, dans laquelle le produit de réaction amine latente présente une polydispersité d'environ 1,1 ou moins.

13. Composition de revêtement selon l'une quelconque des revendications 1 à 12, dans laquelle le produit de réaction amine latente présente une polydispersité d'environ 1,05 ou moins.

14. Composition de revêtement selon l'une quelconque des revendications 1 à 13, dans laquelle le produit de réaction amine latente est formé par réaction d'un excès molaire du composé amine avec l'anhydride cyclique.

15. Composition de revêtement selon la revendication 14, dans laquelle il existe une proportion d'au moins environ quatre moles de composé amine pour chaque mole d'anhydride cyclique.

16. Composition de revêtement selon l'une quelconque des revendications 1 à 15, dans laquelle l'anhydride cyclique est choisi parmi le groupe constitué de composés anhydride phtalique, de composés anhydride phtalique hydrogénés, de composés anhydride succinique et de composés anhydride maléique.

17. Composition de revêtement selon l'une quelconque des revendications 1 à 16, dans laquelle le composé amine est une polyalkylène-polyamine.

18. Composition de revêtement selon l'une quelconque des revendications 1 à 18, dans laquelle le produit de réaction amine latente est le produit de réaction d'une proportion d'au moins environ quatre moles de diéthylènetriamine par mole d'anhydride phtalique.

19. Composition de revêtement selon la revendication 3, dans laquelle la résine cationique (a) renferme des groupes amine primaire au moins partiellement salifiés.

20. Composition de revêtement selon la revendication 20, dans laquelle ladite résine cationique (a) est le produit de réaction d'une résine (a)(i) renfermant plusieurs groupes fonctionnels réactifs vis-à-vis d'une amine secondaire avec le produit de réaction amine latente (a) (ii) et
(a) (iii) un composé renfermant un groupe amine secondaire et au moins un groupe cétimine.

21. Composition de revêtement selon la revendication 2, dans laquelle la résine à fonction amine latente (a) est le produit de réaction d'une résine (a)(i) renfermant plusieurs groupes fonctionnels réactifs vis-à-vis d'une amine secondaire avec le produit de réaction amine latente (a)(ii) et
(a)(iii) un composé renfermant un groupe amine secondaire et au moins un groupe cétimine.

22. Composition de revêtement selon l'une quelconque des revendications 1 à 3, dans laquelle le composé (b) renferme au moins environ trois groupes carbonate cycliques par molécule en moyenne.

23. Composition de revêtement comprenant
(a) un composé de structure 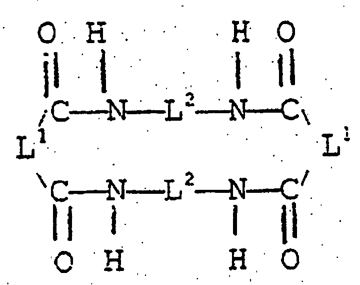 dans laquelle L¹ est un groupe de liaison bivalent dans lequel les valences de liaison sont sur deux atomes de carbone adjacents, et en outre dans laquelle L² est choisi parmi le groupe constitué de groupes arylène, alkylène et N,N'-dialkylène-amine ;
et
(b) un composé renfermant plusieurs groupes carbonate cycliques.

24. Composition de revêtement comprenant
(a) une résine comprenant une structure 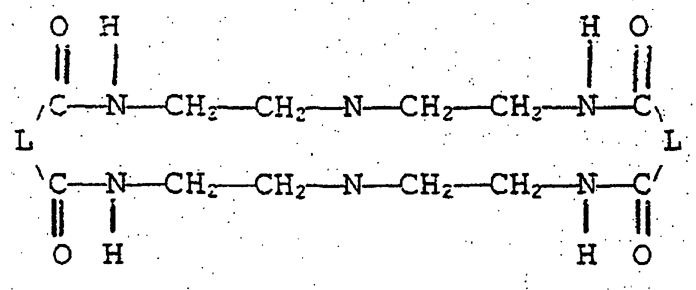 dans laquelle au moins l'un des azotes d'amine est lié par covalence à la résine, et en outre dans laquelle L est un groupe de liaison bivalent dans lequel les valences de liaison sont sur deux atomes de carbone adjacents ; et
(b) un composé renfermant plusieurs groupes carbonate cycliques.

25. Composition de revêtement comprenant, dans un milieu aqueux,
(a) une résine cationique comprenant une structure 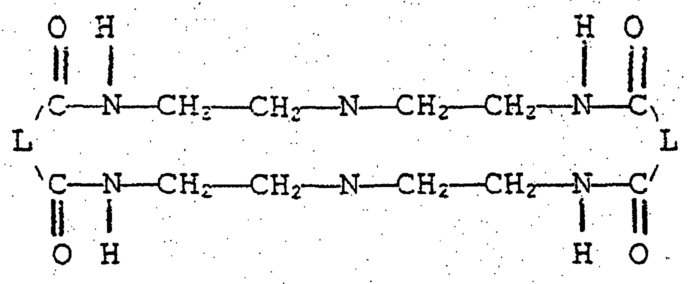 dans laquelle au moins l'un des azotes d'amine est lié par covalence à la résine principale, et en outre dans laquelle L est un groupe de liaison bivalent dans lequel les valences de liaison sont sur deux atomes de carbone adjacents ;
et
(b) un composé renfermant plusieurs groupes carbonate cycliques.

26. Substrat sur lequel se trouve un revêtement dérivé d'une composition selon l'une quelconque des revendications 1 à 26.

27. Procédé de revêtement d'un substrat conducteur, comprenant les étapes consistant à
(a) procurer une composition aqueuse de revêtement comprenant une résine cationique renfermant une fonction amine primaire latente et un agent durcissant renfermant plusieurs groupes carbonate cycliques, où ladite fonction amine primaire latente est obtenue par réaction de
(i) un anhydride cyclique et
(ii) un composé amine renfermant deux groupes amine primaire et un groupe amine secondaire;
(b) immerger un substrat conducteur dans ladite composition de revêtement par électrodéposition ; et
(c) appliquer un potentiel de courant électrique entre une anode et le substrat conducteur pour déposer une couche de revêtement sur le substrat conducteur.

28. Procédé selon la revendication 28, dans lequel ladite résine cationique est une résine époxy.

29. Procédé selon la revendication 28, dans lequel le produit de réaction de (a) (i) et (a) (ii) présente une polydispersité d'environ 1,1 ou moins.

30. Résine cationique formée par le procédé comprenant les étapes consistant à :
(a) faire réagir un anhydride cyclique et un composé amine renfermant deux groupes amine primaire et un groupe amine secondaire pour former un composé amine latente ;
(b) faire réagir le composé amine latente avec une résine renfermant au moins un groupe réactif vis-à-vis d'une fonction amine secondaire ; et
(c) salifier la résine avec un acide.
